# EUROPEAN PATENT APPLICATION

(11) **EP 3 395 162 A1**
(43) Date of publication of application: **31.10.2018**
(21) Application number: 16878265.4
(22) Date of filing: 28.11.2016
(51) Int. Cl.: A01G 9/08, A01C 11/00, A01G 31/02

(54) **TRANSPLANTING DEVICE AND TRANSPLANTING METHOD**

(30) Priority: 24.12.2015 JP 2015251449
(71) Applicant: Tsubakimoto Chain Co., Osaka-shi, Osaka 530-0005 (JP)
(72) Inventor: ITO, Go, Osaka-shi, Osaka 530-0005 (JP); TOHDA, Satoshi, Osaka-shi, Osaka 530-0005 (JP)
(74) Representative: Westphal, Mussgnug & Partner Patentanwälte mbB
(86) International application number: PCT/JP2016/085139
(87) International publication number: WO 2017/110371

(57) **Abstract**

A transplanting device (11) separates a seedling bed piece (14) with a seedling (N) from a seedling bed (12) along slits (22) and transplants the separated seedling bed piece (14) to a permanent planting panel (16). The transplanting device (11) includes a separating mechanism (15) and a transplanting mechanism (18). The separating mechanism (15) includes a holding member (30) capable of holding the seedling bed piece (14). The separating mechanism (15) is capable of separating the seedling bed piece (14) from the seedling bed (12) by moving the holding member (30) and the seedling bed (12) relative to each other with the holding member (30) holding the seedling bed piece (14). The transplanting mechanism (18) is capable of transplanting the separated seedling bed piece (14) to the permanent planting panel (16). The separating mechanism (15) includes an engagement bar (42) capable of hampering movement of an adjacent seedling bed piece (14B) adjacent to a holding-target seedling bed piece (14A) held by the holding member (30) by becoming engaged with the adjacent seedling bed piece (14B) from a side that is different from a first side, on which the stalk of the seedling (N) grows.

## Description

### TECHNICAL FIELD

The present invention relates to a transplanting device and a transplanting method for transplanting, for example, a plant.

### BACKGROUND ART

Conventionally, a permanent planting machine described in Patent Document 1, for example, is known as one such transplanting device. The permanent planting machine separates a urethane mat having seedlings into cubic seedling bed blocks using holding needles. Slits are provided in the upper surface of the urethane mat in a grid-like manner. Each of the seedling bed blocks is transferred to a transplanting needle. The transplanting needle then transplants the seedling bed block into a pot-hole provided in a growing panel.

### PRIOR ART DOCUMENT

### Patent Document

Patent Document 1: Japanese Laid-Open Patent Publication No. 2004-187661

### SUMMARY OF THE INVENTION

### Problems that the Invention is to Solve

The above-described permanent planting machine uses press-down bars to facilitate tear and separation of the seedling bed blocks from the urethane mat having seedlings by the holding needles. The press-down bars press down those of the seedling bed blocks around a separation-target seedling bed block from the side corresponding to the upper surfaces of the seedling bed blocks, from which the leaves and stalks of the seedlings project. The leaves and stalks of the seedlings may thus be damaged by the press-down bars.

Accordingly, it is an objective of the present invention to provide a transplanting device and a transplanting method capable of accurately separating a seedling bed piece from a seedling bed partitioned into multiple seedling bed pieces while restraining damages to the leaves and stalks of seedlings.

### Means for Solving the Problems

Means and operational advantages for solving the above-described problem will now be described.

To achieve the foregoing objective, a transplanting device is provided that separates, from a seedling bed that is partitioned by slits and configured by a plurality of seedling bed pieces each of which includes a seedling, at least one of the seedling bed pieces along the slits and transplants the separated seedling bed piece to a site of transplant. The transplanting device includes a separating mechanism and a transplanting mechanism. The separating mechanism has a holding member capable of holding the seedling bed piece and is capable of separating the seedling bed piece from the seedling bed by moving the holding member and the seedling bed relative to each other with the holding member holding the seedling bed piece. The transplanting mechanism is capable of transplanting the seedling bed piece that has been separated by the separating mechanism to the site of transplant. The separating mechanism includes a movement hampering member capable of hampering movement of an adjacent seedling bed piece adjacent to the seedling bed piece held by the holding member by becoming engaged with the adjacent seedling bed piece from a side that is different from a first side, on which a stalk of the seedling grows.

With this configuration, when the seedling bed piece held by the holding member is separated from the seedling bed by moving the holding member and the seedling bed relative to each other, the movement hampering member is engaged with the adjacent seedling bed piece from the side that is different from the first side, on which the stalks of the seedlings grow. In this manner, only the seedling bed piece held by the holding member is separated from the seedling bed with the adjacent seedling bed maintained in the seedling bed. In this case, contact between the movement hampering member and the leaves or stalks of the seedlings does not happen. This ensures accurate separation of the seedling bed piece from the seedling bed, which is partitioned into the seedling bed pieces, while restraining damages to the leaves and stalks of the seedlings.

In the above-described transplanting device, a root of the seedling preferably grows on a second side. The holding member preferably holds the seedling bed piece from a side that is different from the first side and the second side. The movement hampering member is preferably engaged with the adjacent seedling bed piece from the second side.

This configuration restrains interference between the holding member and the movement hampering member.

In the above-described transplanting device, the separating mechanism preferably includes a movable member that is movable to an opposed position that is a position at which the movable member is opposed to the movement hampering member with the adjacent seedling bed piece in between before the movement hampering member is engaged with the adjacent seedling bed piece. The movable member is preferably also movable to a retreat position that is a position to which the movable member retreats from the opposed position after the movement hampering member is engaged with the adjacent seedling bed piece.

This configuration hampers movement of the adjacent seedling bed piece caused by pressing of the adjacent seedling bed piece by the movement hampering member when the movement hampering member is engaged with the adjacent seedling bed piece.

To achieve the foregoing objective, a transplanting method is provided that separates, from a seedling bed that is partitioned by slits and configured by a plurality of seedling bed pieces each of which includes a seedling, at least one of the seedling bed pieces along the slits and transplants the separated seedling bed piece to a site of transplant. The transplanting method includes: holding the seedling bed piece; hampering movement of an adjacent seedling bed piece adjacent to the held seedling bed piece through engagement with the adjacent seedling bed piece from a side that is different from a first side, on which the seedling grows; separating the held seedling bed piece from the seedling bed; and transplanting the separated seedling bed piece to the site of transplant.

This configuration restrains contact with the leaves or stalks of the seedlings when movement of the adjacent seedling bed piece is hampered through engagement with the adjacent seedling bed piece from the side that is different from the first side, on which the stalks of the seedlings grow. This ensures accurate separation of the seedling bed piece from the seedling bed, which is partitioned into the seedling bed pieces, while restraining damage to the leaves or stalks of the seedlings.

The above-described transplanting method preferably includes, with the seedling bed piece held by a holding member capable of holding the seedling bed piece, inserting a movement hampering member capable of hampering movement of the adjacent seedling bed piece into the slit between the seedling bed piece and the adjacent seedling bed piece.

This configuration restrains, by means of the holding member, movement of the seedling bed piece caused by pressing of the seedling bed piece by the movement hampering member when the movement hampering member is inserted into the slits between the seedling bed piece and the adjacent seedling bed piece.

The above-described transplanting method preferably includes inserting the movement hampering member into the slit between the seedling bed piece and the adjacent seedling bed piece with the seedling bed piece held and pulled by the holding member to widen the slit.

This configuration facilitates insertion of the movement hampering member into the slits between the seedling bed piece and the adjacent seedling bed piece.

To achieve the foregoing objective, a transplanting device is provided that separates, from a seedling bed that is partitioned by slits and configured by a plurality of seedling bed pieces each of which includes a seedling, at least one of the seedling bed pieces along the slits and transplants the separated seedling bed piece to a site of transplant. The transplanting device includes a separating mechanism and a transplanting mechanism. The separating mechanism has a holding member capable of holding the seedling bed piece and is capable of separating the seedling bed piece from the seedling bed by moving the holding member and the seedling bed relative to each other with the holding member holding the seedling bed piece. The transplanting mechanism is capable of transplanting the seedling bed piece that has been separated by the separating mechanism to the site of transplant. The separating mechanism includes a movement hampering member capable of hampering movement of an adjacent seedling bed piece adjacent to the seedling bed piece held by the holding member by moving toward the adjacent seedling bed piece from a side that is different from a first side on which a stalk of the seedling grows and becoming engaged with an outer surface of the adjacent seedling bed piece at a position between the stalk of the seedling and the slit.

With this configuration, when the seedling bed piece held by the holding member is separated from the seedling bed by moving the holding member and the seedling bed relative to each other, the movement hampering member is moved toward the adjacent seedling bed piece from the side that is different from the first side, on which the stalks of the seedlings grow. The movement hampering member is thus engaged with the outer surface of the adjacent seedling bed piece at a position between the stalks of the seedlings and the slits to hamper movement of the adjacent seedling bed piece. In this manner, only the seedling bed piece held by the holding member is separated from the seedling bed with the adjacent seedling bed piece maintained in the seedling bed. In this case, the movement hampering member does not press down the leaves or stalks of the seedlings. This ensures accurate separation of the seedling bed piece from the seedling bed, which is partitioned into the seedling bed pieces, while restraining damage to the leaves or stalks of the seedlings.

### EFFECTS OF THE INVENTION

The present invention is capable of accurately separating a seedling bed piece from a seedling bed partitioned into multiple seedling bed pieces while restraining damage to the leaves and stalk of a seedling.

### BRIEF DESCRIPTION OF THE DRAWINGS

Fig. 1 is a perspective view showing a transplanting device according to one embodiment.
Fig. 2 is a perspective view illustrating a state in which a seedling bed and a permanent planting panel are mounted on the transplanting device.
Fig. 3 is a perspective view showing a seedling bed tray.
Fig. 4 is a perspective view schematically showing a section of the seedling bed.
Fig. 5 is a plan view schematically showing a section of the seedling bed.
Fig. 6 is a block diagram representing the electric configuration of the transplanting device.
Fig. 7 is a perspective view illustrating a state in which holding-target seedling bed pieces are held by corresponding holding members.
Fig. 8 is a perspective view illustrating a state in which engagement bars are inserted into slits between the holding-target seedling bed pieces and the adjacent seedling bed pieces.
Fig. 9 is an enlarged plan view showing a section of Fig. 8.
Fig. 10 is a perspective view illustrating a state in which the holding-target seedling bed pieces are separated from the seedling bed.
Fig. 11 is a perspective view illustrating a state in which the aligned and integrated holding-target seedling bed pieces are simultaneously separated independently from one another.
Fig. 12 is a perspective view illustrating a state in which pinching members are raised.
Fig. 13 is a perspective view illustrating a state in which a holding-target seedling bed piece held by a holding member is transferred to a pinching member.
Fig. 14 is a perspective view illustrating a state in which the holding-target seedling bed piece is transplanted in a hole provided in a permanent planting panel.
Fig. 15 is a perspective view illustrating a state of a modification in which engagement bars are inserted into slits between holding-target seedling bed pieces and adjacent seedling bed pieces.
Fig. 16 is a perspective view illustrating a state of a modification in which a holding member is moved toward a holding-target seedling bed piece.
Fig. 17 is a perspective view illustrating a state in which the holding member of Fig. 16 contacts the holding-target seedling bed piece.
Fig. 18 is a perspective view illustrating a state in which the holding member of Fig. 16 holds the holding-target seedling bed piece.
Fig. 19 is a perspective view illustrating a state in which the holding member of Fig. 16 separates the holding-target seedling bed piece from the seedling bed.
Fig. 20 is an enlarged perspective view showing a main section of a modification of the transplanting device.
Fig. 21 is an enlarged perspective view showing a main section of another modification of the transplanting device.
Fig. 22 is a perspective view illustrating a state in which a round bar is engaged with adjacent seedling bed pieces of Fig. 21.
Fig. 23 is a perspective view illustrating a state in which holding-target seedling bed pieces of Fig. 22 are raised.

### MODES FOR CARRYING OUT THE INVENTION

A transplanting device according to one embodiment will now be described with reference to the drawings.

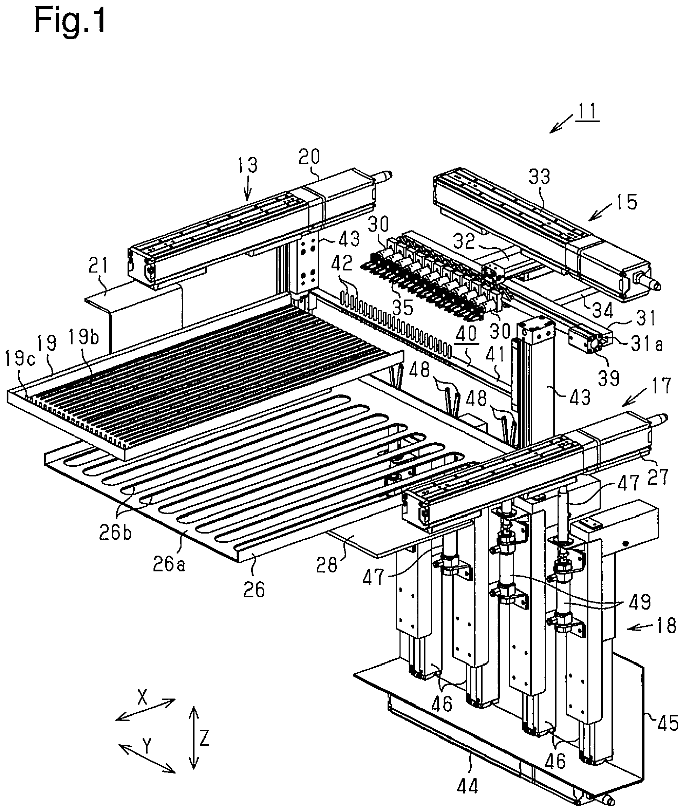

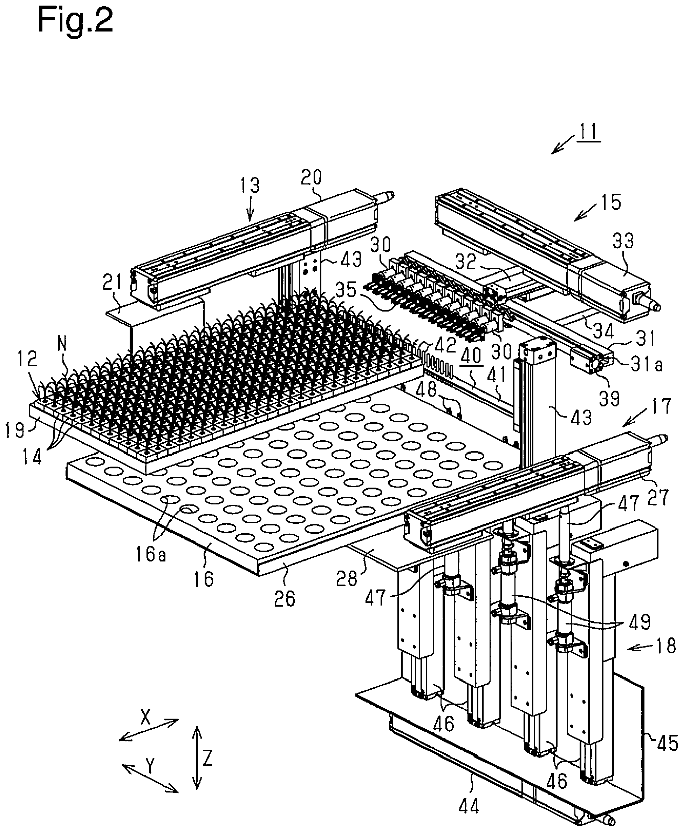

As shown in Figs. 1 and 2, a transplanting device 11 is supported by a non-illustrated frame and has a first transfer mechanism 13, a separating mechanism 15, a second transfer mechanism 17, and a transplanting mechanism 18. The first transfer mechanism 13 transfers a seedling bed 12. The separating mechanism 15 separates seedling bed pieces 14 from the seedling bed 12. The second transfer mechanism 17 transfers a permanent planting panel 16. The transplanting mechanism 18 transplants the seedling bed pieces 14 to the permanent planting panel 16, which is a site of transplant.

The first transfer mechanism 13 includes a seedling bed tray 19 and a first driving section 20. The seedling bed tray 19 is adapted to receive the seedling bed 12. The first driving section 20 moves the seedling bed tray 19 in the front-rear direction X of the transplanting device 11. The first driving section 20 has a drive source such as a motor and supports the seedling bed tray 19 through an L-shaped coupling plate 21. The first driving section 20 is driven to transfer the seedling bed tray 19 in the front-rear direction X with the seedling bed 12 mounted on the seedling bed tray 19.

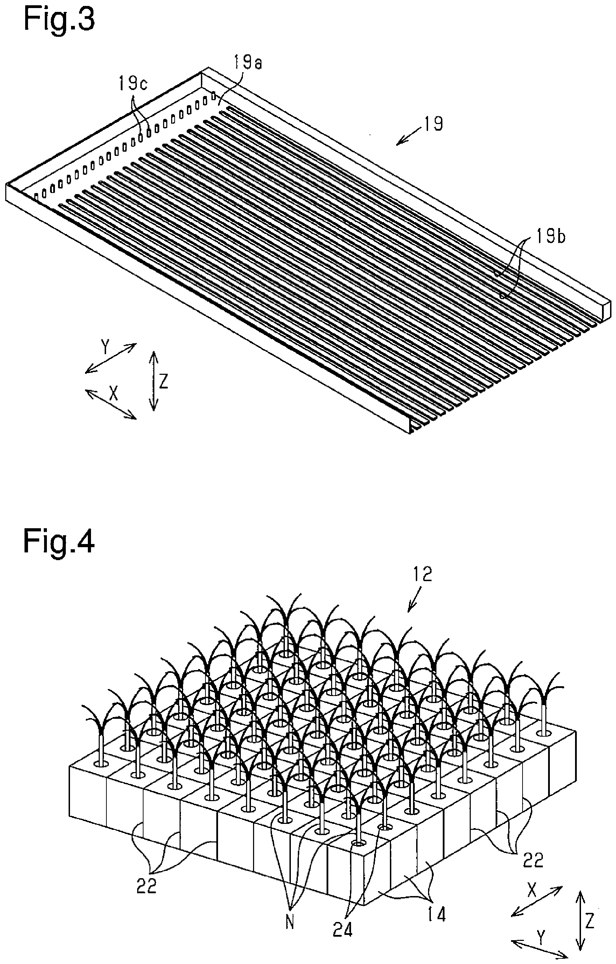

As shown in Figs. 1 and 3, the seedling bed tray 19 has a rectangular plate-like shape elongated in the front-rear direction X. Low side walls are provided on the opposite edges of the seedling bed tray 19 in the left-right direction Y, which is perpendicular to the front-rear direction X, and the front edge of the seedling bed tray 19. The seedling bed tray 19 does not have a side wall on the rear edge. A bottom wall 19a of the seedling bed tray 19 has slots 19b extending linearly in the front-rear direction X. The slots 19b are provided substantially in an entire area of the bottom wall 19a to be parallel with one another and spaced apart at equal intervals in the left-right direction Y.

Each of the slots 19b reaches the rear edge of the bottom wall 19a but not the front edge of the bottom wall 19a. That is, the front end of the bottom wall 19a of the seedling bed tray 19 has a range that lacks the slots 19b. Substantially columnar projections 19c project upright in the range.

The projections 19c are arranged in correspondence with the respective slots 19b in the front-rear direction X. The number of the projections 19c is thus equal with the number of the slots 19b. The projections 19c are aligned linearly in the left-right direction Y to be spaced apart at equal intervals.

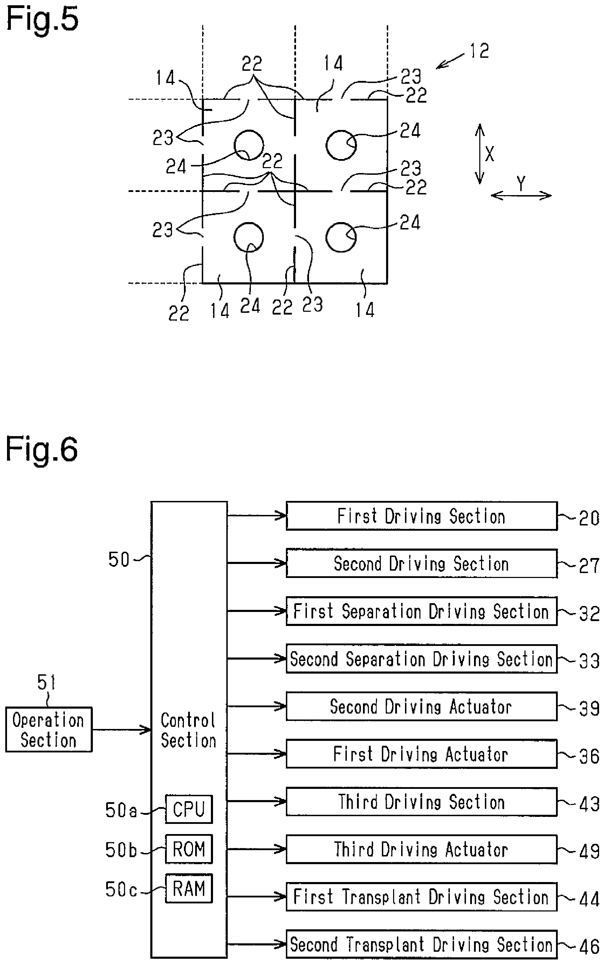

As shown in Figs. 4 and 5, the seedling bed 12 is an elastically deformable mat body having a rectangular shape in a plan view. The mat body is made of foamed plastic such as urethane. The seedling bed 12 has a large number of slits 22 extending in the front-rear direction X and the left-right direction Y. The slits 22 are arranged in a grid-like manner in a plan view. The seedling bed 12 is partitioned into substantially cubic seedling bed pieces 14 by the slits 22. Specifically, in the present embodiment, the grid-like slits 22 are provided in the seedling bed 12 to bring about a matrix-like arrangement in which respective sets of twelve seedling bed pieces 14 are arranged in the left-right direction Y and respective sets of twenty-five seedling bed pieces 14 are arranged in the front-rear direction X.

As shown in Fig. 5, the side of each of the seedling bed pieces 14 corresponding to the boundary with an adjacent seedling bed piece 14 has a substantially middle section that configures a coupling portion 23. The coupling portion 23 partially extends continuously to the adjacent seedling bed piece 14. The slits 22 and the coupling portions 23 extend continuously in alternating manners in the left-right direction Y and the front-rear direction X. This arrangement couples the seedling bed pieces 14, which configure the seedling bed 12, to the adjacent seedling bed pieces 14 intermittently in the left-right direction Y and the front-rear direction X.

A recess 24 is provided in a substantially middle section of the upper surface of each seedling bed piece 14 and has a circular shape in a plan view. A plant seedling N is planted in the recess 24. A cut is provided in the bottom of the recess 24 of the seedling bed piece 14 and extends to the lower surface of the seedling bed piece 14. This allows the root of the seedling N planted in the recess 24 of each seedling bed piece 14 to grow through the cut to the exterior of the seedling bed piece 14 from the side corresponding to the lower surface of the seedling bed piece 14.

As shown in Figs. 1, 2, and 5, to mount the seedling bed 12 on the seedling bed tray 19, the seedling bed 12 is positioned by inserting the projections 19c into the foremost ones of the slits 22 that extend in the left-right direction Y of the seedling bed 12.

As shown in Figs. 1 and 2, the second transfer mechanism 17 includes a permanent planting tray 26 and a second driving section 27. The permanent planting tray 26 is adapted to receive a permanent planting panel 16. The permanent planting panel 16 is adapted for transplant of the seedling bed pieces 14. The second driving section 27 moves the permanent planting tray 26 in the front-rear direction X. The permanent planting tray 26 is arranged below the seedling bed tray 19. The second driving section 27 has a drive source such as a motor and supports the permanent planting tray 26 through a rectangular coupling plate 28. The second driving section 27 is driven to transfer the permanent planting tray 26 in the front-rear direction X with the permanent planting panel 16 mounted on the permanent planting tray 26.

The permanent planting tray 26 has a rectangular plate-like shape elongated in the front-rear direction X. Low side walls are provided on the opposite, left and right edges and the rear edge of the permanent planting tray 26. The permanent planting tray 26 does not have a side wall on the front edge. A bottom wall 26a of the permanent planting tray 26 has elongated holes 26b. Each of the elongated holes 26b extends through the bottom wall 26a and is elongated in the front-rear direction X. The elongated holes 26b are provided substantially in the entire range of the bottom wall 26a to be parallel with one another and spaced apart at equal intervals in the left-right direction Y.

The permanent planting panel 16 has a rectangular plate-like shape elongated in the front-rear direction X. The thickness of the permanent planting panel 16 corresponds to the dimension of each seedling bed piece 14 in the up-down direction (the vertical direction) Z. The up-down direction Z corresponds to the direction perpendicular to both the front-rear direction X and the left-right direction Y. The permanent planting panel 16 has permanent planting holes 16a. The permanent planting holes 16a extend through the permanent planting panel 16. In the present embodiment, one hundred holes 16a are provided in the permanent planting panel 16. Each of the holes 16a has a circular shape in a plan view. The circle along the inner peripheral surface of each hole 16a is the incircle of the square corresponding to the shape of one surface (for example, the bottom surface) of each seedling bed piece 14, which substantially has a cubicle shape.

Therefore, when each seedling bed piece 14 is inserted into the corresponding hole 16a, the four corner sections of the seedling bed piece 14 in a plan view are elastically deformed to be pressed against and come into contact with the inner peripheral surface of the hole 16a. The seedling bed piece 14 is thus maintained in the hole 16a. Specifically, in the permanent planting panel 16 of the present embodiment, a hole row is configured by corresponding ten of the holes 16a aligned in the left-right direction Y and ten such rows are aligned in the front-rear direction X. In the state in which the permanent planting panel 16 is mounted on the permanent planting tray 26, each of the holes 16a and the corresponding one of the elongated holes 26b correspond to each other in the up-down direction Z.

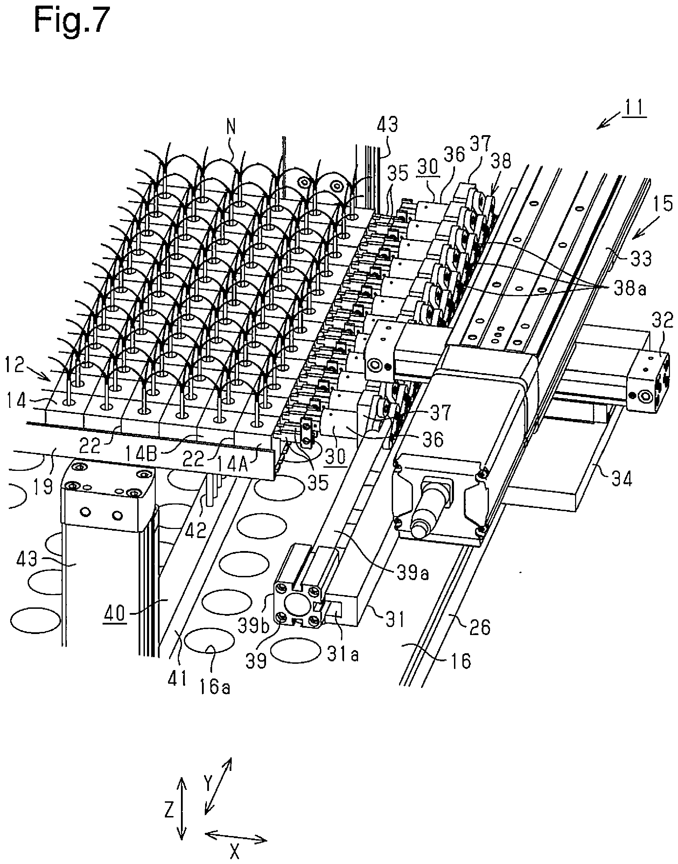

As shown in Figs. 1 and 7, the separating mechanism 15 is arranged rearward of the first transfer mechanism 13 and the second transfer mechanism 17. The separating mechanism 15 includes a guide member 31, a first separation driving section 32, and a second separation driving section 33. The first separation driving section 32 moves the guide member 31 in the front-rear direction X. The second separation driving section 33 supports and moves the first separation driving section 32 in the left-right direction Y. The guide member 31 supports multiple holding members 30. Each of the holding members 30 is capable of holding one of the seedling bed pieces 14 that are aligned in the left-right direction Y and constitute each row. In the present embodiment, twelve of the seedling bed pieces 14 are aligned in the left-right direction Y and constitute each row. The guide member 31 thus supports twelve holding members 30. The second separation driving section 33 has a drive source such as a motor. The second separation driving section 33 is driven to move the first separation driving section 32 in the left-right direction Y.

The guide member 31 extends in the left-right direction Y and is supported by the first separation driving section 32 through a rectangular coupling plate 34. The first separation driving section 32 has a drive source such as a motor. The first separation driving section 32 is driven to move the guide member 31 in the front-rear direction X through the coupling plate 34. A guide groove 31a is provided in and extends throughout the front surface of the guide member 31 in the left-right direction Y. A section of each of the holding members 30 is inserted into the guide groove 31a. The guide groove 31a thus supports the holding members 30 slidably in the left-right direction Y.

Each of the holding members 30 includes two holding pieces 35, a first driving actuator 36, and a rectangular plate-like base portion 37. The holding pieces 35 are aligned in the left-right direction Y and hold one of the seedling bed pieces 14 from behind. The first driving actuator 36 supports and drives the two holding pieces 35. The base portion 37 supports the first driving actuator 36. The first driving actuator 36 is configured by, for example, an air cylinder.

Each of the first driving actuators 36 drives two of the holding pieces 35 to selectively hold one of the seedling bed pieces 14 and release the seedling bed piece 14. That is, by driving the first driving actuator 36, the holding pieces 35 are moved to selectively approach and separate from each other.

A link mechanism 38 is arranged between the guide member 31 and the holding members 30 and extends in the left-right direction Y. The link mechanism 38 is configured by pivotally coupling multiple X-crossed links in series in the left-right direction Y using twelve shafts 38a. That is, the link mechanism 38 is configured to selectively extend and contract in the left-right direction Y. In the link mechanism 38, each of the shafts 38a is located on the crossing point between adjacent two of the X-shaped links. The shafts 38a are each coupled to the base portion 37 of one of the twelve holding members 30.

A second driving actuator 39 is coupled to one end of the link mechanism 38 in the left-right direction Y. The second driving actuator 39 selectively extends and contracts the link mechanism 38 in the left-right direction Y. The second driving actuator 39 is configured by, for example, an air cylinder and has a rod 39a extending in the left-right direction Y and a driving element 39b. The driving element 39b moves the rod 39a in the left-right direction Y. The distal end of the rod 39a is coupled to one end of the link mechanism 38 in the left-right direction Y.

Therefore, when the second driving actuator 39 is driven to reciprocate the rod 39a in the left-right direction Y such that the link mechanism 38 selectively extends and contracts, the shafts 38a move simultaneously to selectively increase and decrease the distance between the shafts 38a.

In this case, the distances between the shafts 38a in the left-right direction Y are all equal. Therefore, when the second driving actuator 39 is driven, the holding members 30 are moved simultaneously to selectively increase and decrease the distance between the holding members 30. In this case, the distances between the holding members 30 in the left-right direction Y are all equal.

The separating mechanism 15 also includes an engagement member 40. The engagement member 40 is arranged below the seedling bed tray 19. The engagement member 40 includes a beam portion 41 and engagement bars 42 each serving as an example of the movement hampering member. The beam portion 41 extends linearly in the left-right direction Y. The engagement bars 42 project upright from the upper surface of the beam portion 41.

Each of the engagement bars 42 is configured by a round bar having a round distal end. The engagement bars 42 are arranged to correspond to the slots 19b, which are provided in the bottom wall 19a of the seedling bed tray 19, in the up-down direction Z after the seedling bed tray 19 is moved to a position above the engagement member 40. Therefore, the number of the engagement bars 42 is equal to the number of the slots 19b. The engagement bars 42 are aligned linearly and spaced apart at equal intervals in the left-right direction Y.

The opposite ends in the left-right direction Y of the beam portion 41 of the engagement member 40 are supported by two third driving sections 43 to be lifted and lowered. The third driving sections 43 each extend in the up-down direction Z and have a drive source such as a motor. The third driving sections 43 are driven to move the engagement member 40 in the up-down direction Z. By raising the engagement member 40 with the seedling bed tray 19 located above the engagement member 40, the engagement bars 42 are inserted into the corresponding slots 19b of the seedling bed tray 19 from the lower side.

As shown in Figs. 1 and 2, the transplanting mechanism 18 is arranged below the separating mechanism 15 at a position lower than the position of the second transfer mechanism 17. The transplanting mechanism 18 includes a first transplant driving section 44, an L-shaped base plate 45, second transplant driving sections 46, and pinching members 47. The first transplant driving section 44 extends in the left-right direction Y. The base plate 45 is arranged on the first transplant driving section 44. The second transplant driving sections 46 are attached to the base plate 45. The pinching members 47 are each supported by one of the second transplant driving sections 46 movably in the up-down direction Z. The present embodiment has four second transplant driving sections 46 and four pinching members 47.

The first transplant driving section 44 has a drive source such as a motor. The first transplant driving section 44 is driven to move the base plate 45 in the left-right direction Y. The four second transplant driving sections 46 are spaced apart at equal intervals in the left-right direction Y and each have a drive source such as a motor. Each of the second transplant driving sections 46 is driven to move the associated one of the pinching members 47, which is supported by the second transplant driving section 46, in the up-down direction Z. Each of the pinching members 47 extends in the up-down direction Z and has such a size that the pinching member 47 can be inserted into the holes 16a of the permanent planting panel 16.

Each of the pinching members 47 has two pinching pieces 48 at the distal end and a third driving actuator 49 at the proximal end. The pinching pieces 48 are capable of pinching one of the seedling bed pieces 14. The third driving actuator 49 drives the associated pinching pieces 48. The third driving actuator 49 is configured by, for example, an air cylinder and drives the pinching pieces 48 to selectively pinch and release the seedling bed piece 14. That is, by driving each third driving actuator 49, the associated pinching pieces 48 are allowed to pivot such that the distal ends of the pinching pieces 48 selectively approach and separate from each other.

The electric configuration of the transplanting device 11 will hereafter be described.

As shown in Fig. 6, the transplanting device 11 includes a control section 50 to integrally control the transplanting device 11 as a whole. The control section 50 includes a CPU 50a, a ROM 50b, and a RAM 50c. The CPU 50a functions as a central processing unit and executes various types of programs. The ROM 50b stores various types of information and a transplanting program in a readable manner. The transplanting program is used to control the operation of the transplanting device 11 as a whole. The RAM 50c stores various types of information in a rewritable-readable manner.

When various types of information are input to the control section 50 through a non-illustrated interface, the CPU 50a executes the transplanting program, which is stored in the ROM 50b. In this manner, the CPU 50a performs various types of calculations necessary for controlling the operation of the transplanting device 11. Also, the CPU 50a reads out various types of information used for the calculations from the ROM 50b and reads out and rewrites such information with respect to the RAM 50c.

An operation section 51 is electrically connected to the input-side interface (not shown) of the control section 50 and operated by the user. The first driving section 20, the second driving section 27, the first separation driving section 32, the second separation driving section 33, the third driving sections 43, the first transplant driving section 44, the second transplant driving sections 46, the second driving actuator 39, the first driving actuators 36, and the third driving actuators 49 are all electrically connected to an output-side interface (not shown) of the control section 50.

In response to operation of the operation section 51, the control section 50 separately controls driving of the first driving section 20, the second driving section 27, the first separation driving section 32, the second separation driving section 33, the third driving sections 43, the first transplant driving section 44, the second transplant driving sections 46, the second driving actuator 39, the first driving actuators 36, and the third driving actuators 49.

The operation of the transplanting device 11 will now be described.

As shown in Fig. 2, the seedling bed 12 and the permanent planting panel 16 are mounted on the seedling bed tray 19 and the permanent planting tray 26, respectively. In this state, to separate the seedling bed pieces 14 from the seedling bed 12 and transplant the seedling bed pieces 14 to the permanent planting panel 16, the operation section 51 is operated to start transplanting operation by the transplanting device 11. Then, the seedling bed 12 and the permanent planting tray 26 are moved rearward and stopped at corresponding predetermined positions, with the seedling bed tray 19 and the permanent planting panel 16 mounted on the seedling bed 12 and the permanent planting tray 26, respectively.

Then, as shown in Fig. 7, the twelve holding members 30, which are aligned in the left-right direction Y, are simultaneously moved forward. Hereinafter, twelve of the seedling bed pieces 14 corresponding to the row located rearmost and aligned in the left-right direction Y will be referred to as holding-target seedling bed pieces 14A. The rear surfaces of the twelve holding-target seedling bed pieces 14A are simultaneously held each by the two holding pieces 35 of the corresponding one of the twelve holding members 30. Hereinafter, the side on which the stalk of each seedling N grows and the side on which the root of the seedling N grows will be referred to as the first side and the second side, respectively. The two holding pieces 35 of each holding member 30 hold the corresponding holding-target seedling bed piece 14A from the rear side, which is different from the upper side corresponding to the first side and the lower side corresponding to the second side.

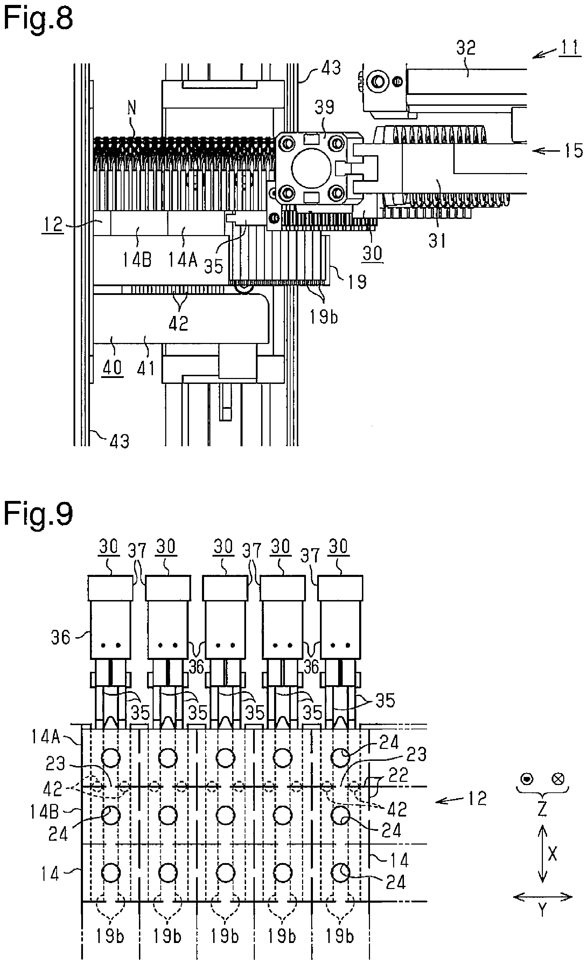

Subsequently, as shown in Figs. 8 and 9, the engagement member 40 is raised to pass the engagement bars 42 through the slots 19b, which are provided in the bottom wall 19a of the seedling bed tray 19. The engagement bars 42 are thus inserted into the slits 22 between the holding-target seedling bed pieces 14A and adjacent seedling bed pieces 14B, which are adjacent to the holding-target seedling bed pieces 14A.

In this manner, the engagement bars 42 hamper rearward movement of the adjacent seedling bed pieces 14B toward the holding members 30. At this time, each of the engagement bars 42 is engaged with the corresponding one of the adjacent seedling bed pieces 14B from the lower side corresponding to the second side, on which the root of the seedling N grows and which is different from the upper side corresponding to the first side, on which the stalks of the seedlings N grow. This restrains damage to the stalk and leaves of the seedling N planted in each of the adjacent seedling bed pieces 14B.

When the engagement bars 42 are inserted into the slits 22 between the holding-target seedling bed pieces 14A and the adjacent seedling bed pieces 14B, the engagement bars 42 receive resistance such as friction force or elastic restoration force from the holding-target seedling bed pieces 14A and the adjacent seedling bed pieces 14B. This may cause the engagement bars 42 to urge the holding-target seedling bed pieces 14A and the adjacent seedling bed pieces 14B upward to float.

However, in the present embodiment, the holding-target seedling bed pieces 14A are each held by the two holding pieces 35 of the corresponding holding member 30 before the engagement bars 42 are inserted into the slits 22 between the holding-target seedling bed pieces 14A and the adjacent seedling bed pieces 14B. This restrains upward urging of the holding-target seedling bed pieces 14A and the adjacent seedling bed pieces 14B by the engagement bars 42, which otherwise causes floating of the seedling bed pieces 14A, 14B.

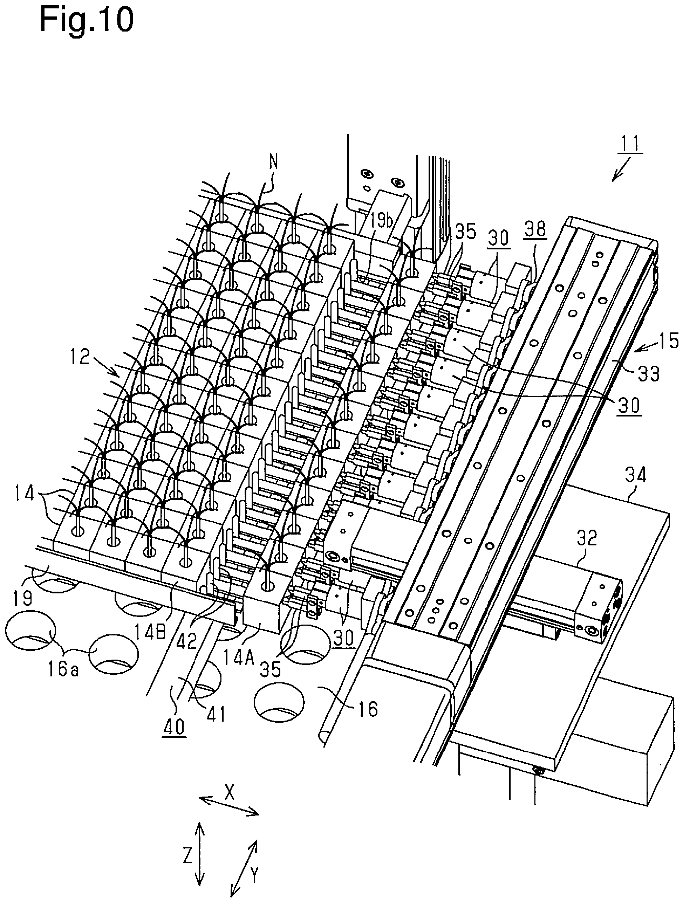

Then, as shown in Fig. 10, the two holding pieces 35 of each holding member 30 are moved rearward with the corresponding holding-target seedling bed piece 14A held by the holding pieces 35. This separates the holding-target seedling bed piece 14A from the seedling bed 12 along the slits 22 between the holding-target seedling bed piece 14A and the corresponding adjacent seedling bed piece 14B. That is, each holding member 30 tears the corresponding holding-target seedling bed piece 14A off from the seedling bed 12 at the coupling portion 23, which couples the holding-target seedling bed piece 14A to the corresponding adjacent seedling bed piece 14B.

At this time, each holding member 30 pulls the corresponding adjacent seedling bed piece 14B rearward through the holding-target seedling bed piece 14A. However, the engagement bars 42 hamper rearward movement of the adjacent seedling bed pieces 14B toward the holding members 30. Each adjacent seedling bed piece 14B is thus unlikely to follow the movement of the corresponding holding-target seedling bed piece 14A to be torn off from the seedling bed 12. As a result, only the holding-target seedling bed pieces 14A are accurately separated from the seedling bed 12 by the corresponding holding members 30.

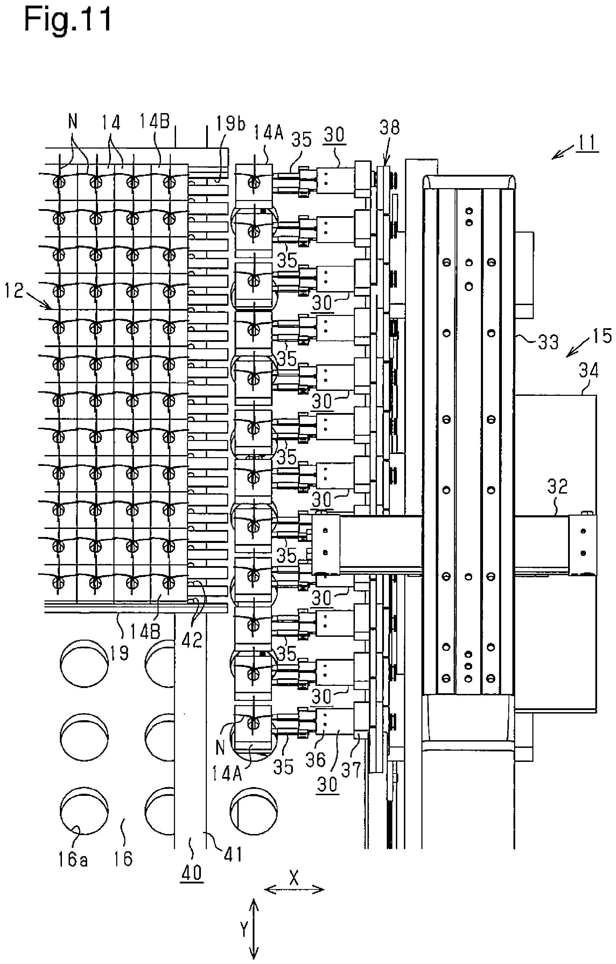

Subsequently, as shown in Fig. 11, the engagement member 40 is lowered and the second driving actuator 39 is driven to switch the link mechanism 38 from the contracted state to the extended state. This simultaneously moves all the holding members 30 to increase the distance between any adjacent two of the holding members 30 in the left-right direction Y.

In this manner, the twelve holding-target seedling bed pieces 14A corresponding to the row, which have been integrated, are torn apart independently and separated from each other by means of the corresponding coupling portions 23, which couple the holding-target bed pieces 14A together. At this time, some of the holding-target seedling bed pieces 14A are arranged immediately above the corresponding ones of the holes 16a of the permanent planting panel 16.

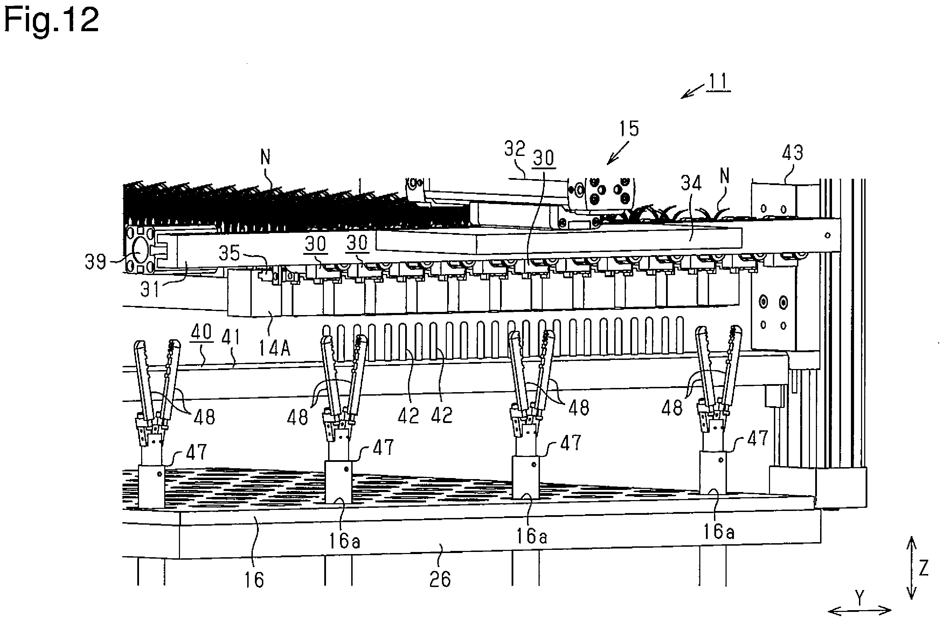

Then, as shown in Fig. 12, the four pinching members 47 are simultaneously moved in the left-right direction Y to move some of the pinching members 47 to positions immediately below those of the holding-target seedling bed pieces 14A located immediately above the corresponding holes 16a of the permanent planting panel 16. The pinching members 47 are then raised to be inserted into the corresponding elongated holes 26b of the permanent planting tray 26 and the holes 16a of the permanent planting panel 16.

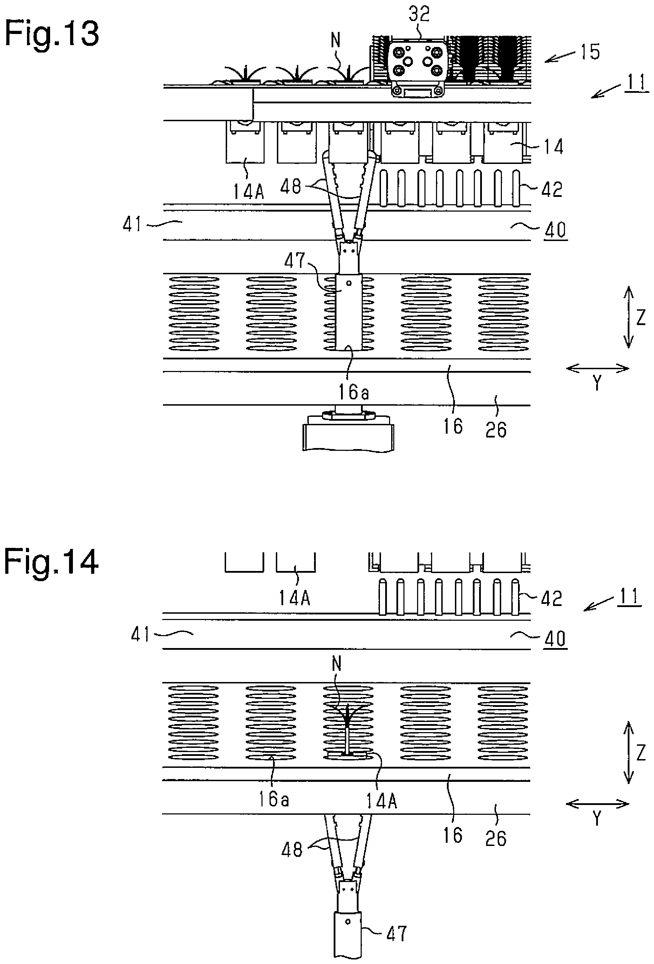

Next, as shown in Fig. 13, each of the pinching members 47 is raised to reach the corresponding one of the holding-target seedling bed pieces 14A held by the two holding pieces 35 of the holding member 30. The holding-target seedling bed piece 14A is thus pinched by the two pinching pieces 48 of the pinching member 47. This releases the holding-target seedling bed piece 14A from the holding pieces 35 of the holding member 30. The holding-target seedling bed piece 14A is then transferred from the holding pieces 35 of the holding member 30 to the pinching pieces 48 of the pinching member 47.

Subsequently, as shown in Fig. 14, the pinching member 47 is lowered while pinching the holding-target seedling bed piece 14A. The holding-target seedling bed piece 14A is then inserted into the corresponding hole 16a of the permanent planting panel 16. This releases the holding-target seedling bed piece 14A from the pinching pieces 48 of the corresponding pinching member 47.

In this manner, the holding-target seedling bed piece 14A is maintained in the hole 16a of the permanent planting panel 16. Then, the pinching member 47 is lowered to complete transplant of a single holding-target seedling bed piece 14A (the single seedling bed piece 14) from the seedling bed 12 to the permanent planting panel 16. Afterwards, in the same manners, the seedling bed pieces 14 are transplanted consecutively from the seedling bed 12 to the permanent planting panel 16.

The above-described embodiment has the following advantages.
(1) By moving the holding members 30, the corresponding holding-target seedling bed pieces 14A, which are held by the holding members 30, are separated from the seedling bed 12. At this time, the separating mechanism 15 of the transplanting device 11 engages the engagement bars 42 with the adjacent seedling bed pieces 14B from the lower side, thus hampering movement of the adjacent seedling bed pieces 14B. The side on which the stalk of each seedling N grows is referred to as the first side and corresponds to the upper side. Therefore, the engagement bars 42 are engaged with the adjacent seedling bed pieces 14B from the lower side, which is different from the first side (the upper side), to hamper movement of the adjacent seedling bed pieces 14B. As a result, only the holding-target seedling bed pieces 14A held by the holding members 30 are separated from the seedling bed 12 with the adjacent seedling bed pieces 14B maintained in the seedling bed 12. In this case, contact of the engagement bars 42 with the leaves and stalks of the seedlings N does not happen. This ensures accurate separation of the holding-target seedling bed pieces 14A from the seedling bed 12, while restraining damage to the leaves and stalks of the seedlings N.
(2) The side on which the root of each seedling N grows is referred to as the second side and corresponds to the lower side. In the transplanting device 11, the holding members 30 hold the corresponding holding-target seedling bed pieces 14A from the rear side, which is different from the upper side, which is the first side, and the lower side, which is the second side. The engagement bars 42 are engaged with the corresponding adjacent seedling bed pieces 14B from the lower side, which is the second side. This restrains interference between the holding-target seedling bed pieces 14A and the engagement bars 42.
(3) The transplanting device 11 inserts the engagement bars 42 into the slits 22 between the holding-target seedling bed pieces 14A and the adjacent seedling bed pieces 14B, with the holding members 30 holding the holding-target seedling bed pieces 14A. As a result, when the engagement bars 42 are inserted into the slits 22 from the lower side, the holding members 30 restrain upward urging of the holding-target seedling bed pieces 14A and the adjacent seedling bed pieces 14B by the engagement bars 42, which otherwise causes floating of the holding-target seedling bed pieces 14A and the adjacent seedling bed pieces 14B.

### Modifications

The above-described embodiments may be modified as follows.

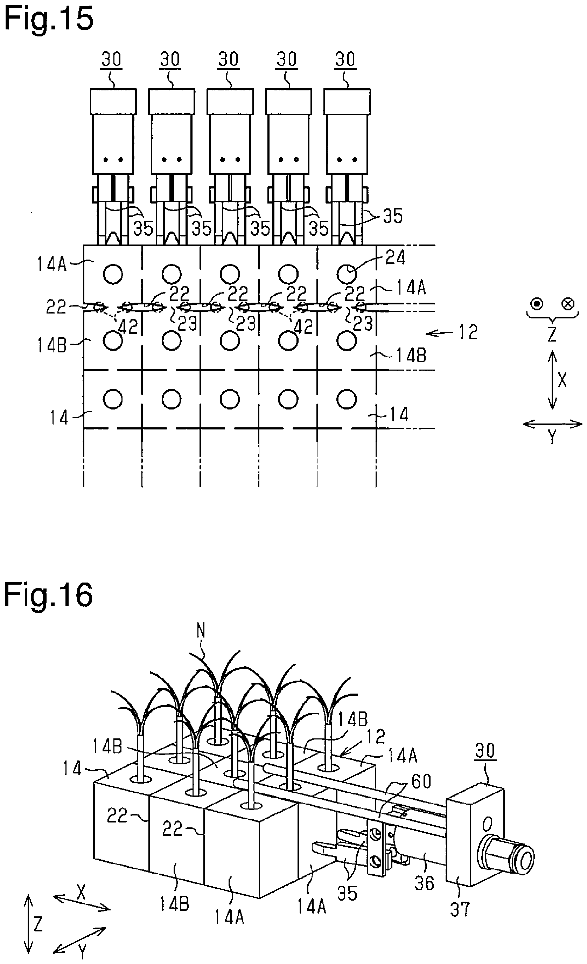

As shown in Fig. 15, to engage the engagement bars 42 with the adjacent seedling bed pieces 14B, the holding-target seedling bed pieces 14A may be held and pulled rearward by the holding members 30 to widen the slits 22 between the holding-target seedling bed pieces 14A and the adjacent seedling bed pieces 14B. In this state, the engagement bars 42 may be inserted into these slits 22. This facilitates insertion of the engagement bars 42 into the slits 22 between the holding-target seedling bed pieces 14A and the adjacent seedling bed pieces 14B.

As shown in Fig. 16, two assist bars 60, each serving as an example of the movable member, may extend linearly forward from the front surface of the base portion 37 of each holding member 30 of the separating mechanism 15. The assist bars 60 are spaced apart at a predetermined distance in the left-right direction Y. The distance between the assist bars 60 in the left-right direction Y is set to such an extent that the assist bars 60 are located within the range corresponding to the dimension (the width) of each seedling bed piece 14 in the left-right direction Y.

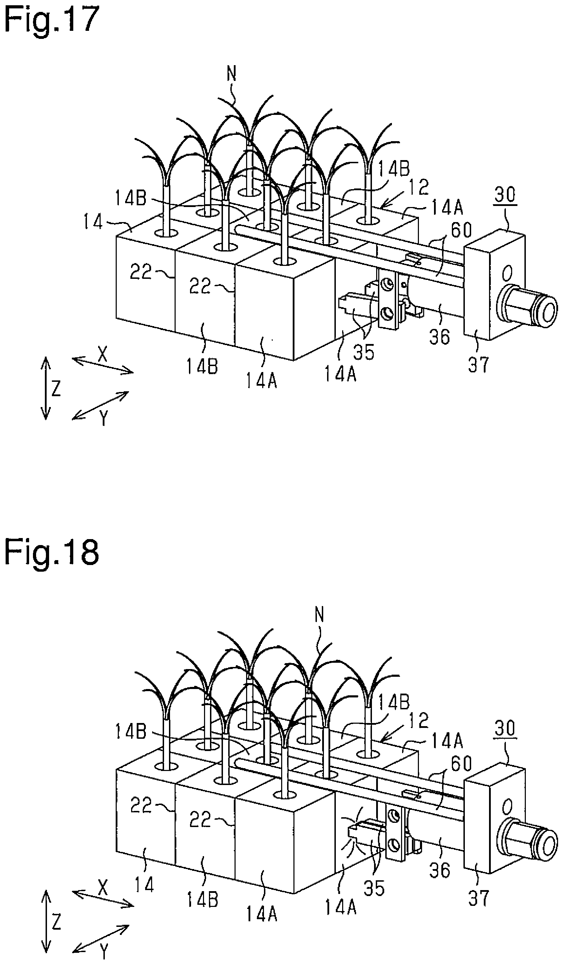

Then, as shown in Figs. 17 and 18, the holding member 30 is moved forward in the front-rear direction X to hold the corresponding holding-target seedling bed piece 14A. The two assist bars 60 thus become opposed to the upper surface of the holding-target seedling bed piece 14A held by the holding member 30 and the upper surface of the adjacent seedling bed piece 14B adjacent to the holding-target seedling bed piece 14A. At this time, the assist bars 60 each form a slight clearance with the upper surface of the holding-target seedling bed piece 14A and the upper surface of the adjacent seedling bed piece 14B. Alternatively, the assist bars 60 may each slightly contact the upper surface of the holding-target seedling bed piece 14A and the upper surface of the adjacent seedling bed piece 14B.

In this state, that is, before the engagement bars 42 (see Fig. 9) become engaged with the adjacent seedling bed pieces 14B, the two assist bars 60 are located at opposed positions (the positions shown in Figs. 17 and 18) at which the assist bars 60 are opposed to the corresponding engagement bars 42 with the adjacent seedling bed piece 14B arranged between the assist bars 60 and the engagement bars 42. Then, the engagement bars 42 are inserted into the slits 22 between the holding-target seedling bed piece 14A and the adjacent seedling bed piece 14B from the lower side. This may cause the engagement bars 42 to urge the holding-target seedling bed piece 14A and the adjacent seedling bed piece 14B to float. However, in this case, the assist bars 60 press down the holding-target seedling bed piece 14A and the adjacent seedling bed piece 14B, thus preventing the holding-target seedling bed piece 14A and the adjacent seedling bed piece 14B from floating.

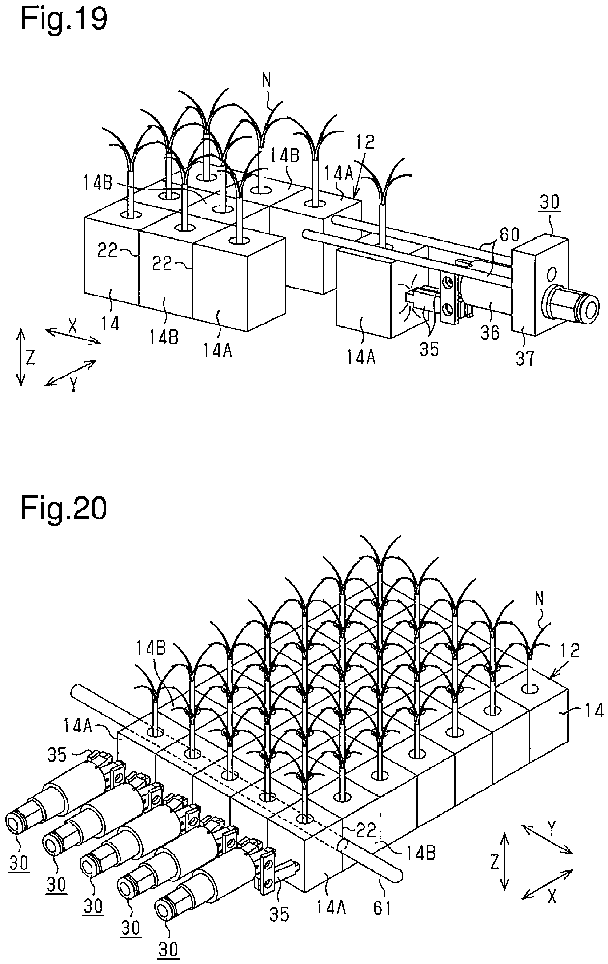

Next, as shown in Fig. 19, the holding member 30 is moved rearward in the front-rear direction X to separate the holding-target seedling bed piece 14A from the seedling bed 12. In this state, that is, after the engagement bars 42 (see Fig. 9) become engaged with the adjacent seedling bed pieces 14B, the two assist bars 60 are located at retreat positions (the positions shown in Fig. 19) to which the assist bars 60 retreat from the aforementioned opposed positions. In other words, the assist bars 60 are movable between the opposed positions and the retreat positions as the holding members 30 move. The number of assist bars 60 is not restricted to two but may be one or more than two.

As shown in Fig. 20, the engagement bars 42 may be replaced by a round bar 61 as an example of the movement hampering member. The round bar 61 extends in the left-right direction Y. The length of the round bar 61 in the left-right direction Y is set to a value slightly greater than the dimension of the seedling bed 12 in the left-right direction Y (the width). The round bar 61 has a shape with a round distal end. The round bar 61 is movable in the left-right direction Y by means of a non-illustrated driving section. The round bar 61 is moved between an insertion position (the position shown in Fig. 20) and a position spaced from the seedling bed 12. When at the insertion position, the round bar 61 is inserted into the slits 22 between the holding-target seedling bed pieces 14A and the adjacent seedling bed pieces 14B in the seedling bed 12. In other words, the round bar 61 is moved from one side in the left-right direction Y to the insertion position and thus becomes engaged with the adjacent seedling bed pieces 14B. The round bar 61 thus hampers rearward movement of the adjacent seedling bed pieces 14B. Specifically, multiple round bars 61 may be employed.

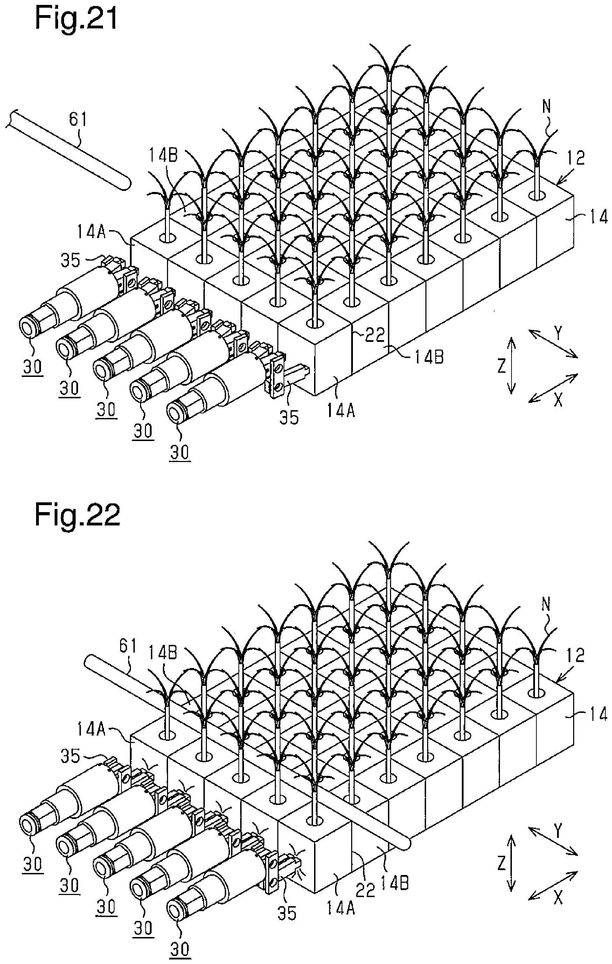

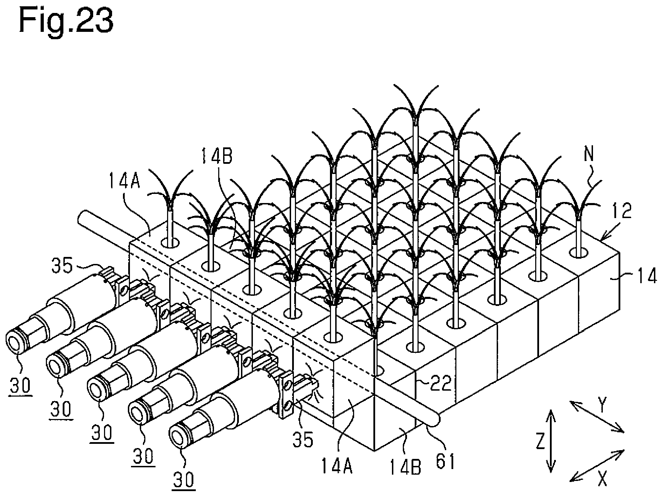

In the above-described case of Fig. 20, the round bar 61 as an example of the movement hampering member may be moved between an engagement position (the position shown in Fig. 22) and a retreat position (the position shown in Fig. 21). When at the engagement position, the round bar 61 is engaged with the outer surfaces of the adjacent seedling bed pieces 14B between the stalks of the seedlings N and the slits 22. When at the retreat position, the round bar 61 is spaced from the seedling bed 12. In other words, as shown in Figs. 21 and 22, the round bar 61 moves toward the adjacent seedling bed pieces 14B from a side (the left side, in this example) in the left-right direction Y that is different from the first side (the upper side, in the example), on which the stalk of each seedling N grows. The round bar 61 then becomes engaged with the outer surfaces of the adjacent seedling bed pieces 14B between the stalks of the seedlings N and the slits 22. In this state (the state shown in Fig. 22), the holding members 30 are raised while holding the corresponding holding-target seedling bed pieces 14A. Then, as shown in Fig. 23, the round bar 61 hampers upward movement of the adjacent seedling bed pieces 14B. The holding-target seedling bed pieces 14A are thus smoothly torn off from the adjacent seedling bed pieces 14B. This ensures accurate separation of the holding-target seedling bed pieces 14A from the seedling bed 12.

The transplanting device 11 may insert the engagement bars 42 into the slits 22 between the holding-target seedling bed pieces 14A and the adjacent seedling bed pieces 14B before the holding members 30 hold the holding-target seedling bed pieces 14A.

The movement hampering member may be configured by a comparatively thin belt-like member. This facilitates insertion of the movement hampering member into the slits 22 between the holding-target seedling bed pieces 14A and the adjacent seedling bed pieces 14B.

The distances between the engagement bars 42 in the left-right direction Y may be changed as needed and do not necessarily have to be all equal.

To separate the holding-target seedling bed pieces 14A from the seedling bed 12, the holding members 30 may be stopped without moving while holding the corresponding holding-target seedling bed pieces 14A. Meanwhile, the seedling bed 12 is moved away from the holding members 30 in the front-rear direction X. Alternatively, both the holding members 30 and the seedling bed 12 may be moved away from each other in the front-rear direction X with the holding members 30 holding the corresponding holding-target seedling bed pieces 14A. The holding-target seedling bed pieces 14A are thus separated from the seedling bed 12.

### DESCRIPTION OF THE REFERENCE NUMERALS

11...Transplanting Device; 12...Seedling Bed; 14...Seedling Bed Piece; 14A...Holding-Target Seedling Bed Piece; 14B...Adjacent Seedling Bed Piece; 15...Separating Mechanism; 16...Permanent Planting Panel as an example of Site of Transplant; 18...Transplanting Mechanism; 22...Slit; 30...Holding Member; 42...Engagement Bar as an example of Movement Hampering Member; 60...Assist Bar as an example of Movable Member; 61...Round Bar as an example of Movement Hampering Member

## Claims

1. A transplanting device that separates, from a seedling bed that is partitioned by slits and configured by a plurality of seedling bed pieces each of which includes a seedling, at least one of the seedling bed pieces along the slits and transplants the separated seedling bed piece to a site of transplant, the transplanting device being **characterized by**:
a separating mechanism, which has a holding member capable of holding the seedling bed piece and is capable of separating the seedling bed piece from the seedling bed by moving the holding member and the seedling bed relative to each other with the holding member holding the seedling bed piece; and
a transplanting mechanism capable of transplanting the seedling bed piece that has been separated by the separating mechanism to the site of transplant,
wherein the separating mechanism includes a movement hampering member capable of hampering movement of an adjacent seedling bed piece adjacent to the seedling bed piece held by the holding member by becoming engaged with the adjacent seedling bed piece from a side that is different from a first side, on which a stalk of the seedling grows.

2. The transplanting device according to claim 1, **characterized in that**
a root of the seedling grows on a second side,
the holding member holds the seedling bed piece from a side that is different from the first side and the second side, and
the movement hampering member is engaged with the adjacent seedling bed piece from the second side.

3. The transplanting device according to claim 1 or 2, **characterized in that** the separating mechanism includes a movable member that is movable to an opposed position that is a position at which the movable member is opposed to the movement hampering member with the adjacent seedling bed piece in between before the movement hampering member is engaged with the adjacent seedling bed piece, wherein the movable member is also movable to a retreat position that is a position to which the movable member retreats from the opposed position after the movement hampering member is engaged with the adjacent seedling bed piece.

4. A transplanting method that separates, from a seedling bed that is partitioned by slits and configured by a plurality of seedling bed pieces each of which includes a seedling, at least one of the seedling bed pieces along the slits and transplants the separated seedling bed piece to a site of transplant, wherein the transplanting method is **characterized by**:
holding the seedling bed piece;
hampering movement of an adjacent seedling bed piece adjacent to the held seedling bed piece through engagement with the adjacent seedling bed piece from a side that is different from a first side, on which the seedling grows;
separating the held seedling bed piece from the seedling bed; and
transplanting the separated seedling bed piece to the site of transplant.

5. The transplanting method according to claim 4, **characterized by**, with the seedling bed piece held by a holding member capable of holding the seedling bed piece, inserting a movement hampering member capable of hampering movement of the adjacent seedling bed piece into the slit between the seedling bed piece and the adjacent seedling bed piece.

6. The transplanting method according to claim 5, **characterized by** inserting the movement hampering member into the slit between the seedling bed piece and the adjacent seedling bed piece with the seedling bed piece held and pulled by the holding member to widen the slit.

7. A transplanting device that separates, from a seedling bed that is partitioned by slits and configured by a plurality of seedling bed pieces each of which includes a seedling, at least one of the seedling bed pieces along the slits and transplants the separated seedling bed piece to a site of transplant, the transplanting device being **characterized by**:
a separating mechanism, which has a holding member capable of holding the seedling bed piece and is capable of separating the seedling bed piece from the seedling bed by moving the holding member and the seedling bed relative to each other with the holding member holding the seedling bed piece; and
a transplanting mechanism capable of transplanting the seedling bed piece that has been separated by the separating mechanism to the site of transplant,
wherein the separating mechanism includes a movement hampering member capable of hampering movement of an adjacent seedling bed piece adjacent to the seedling bed piece held by the holding member by moving toward the adjacent seedling bed piece from a side that is different from a first side on which a stalk of the seedling grows and becoming engaged with an outer surface of the adjacent seedling bed piece at a position between the stalk of the seedling and the slit.
